# EUROPEAN PATENT APPLICATION

(11) **EP 3 663 060 A1**
(43) Date of publication of application: **10.06.2020**
(21) Application number: 18795693.3
(22) Date of filing: 23.07.2018
(51) Int. Cl.: B27K 3/00, B01J 2/00, B27K 3/26, B27K 7/00, B82Y 30/00

(54) **METHOD FOR PRODUCING MAGNETIC CORK PARTICLES, PARTICLES THUS OBTAINED, AND USES THEREOF**

(30) Priority: 31.07.2017 ES 201730993
(71) Applicant: Universidad Carlos III de Madrid, 28918 Leganés - Madrid (ES); Instituto De Ciência E Inovaçao Em Engenharia Mecâ, 4200-465 Porto (PT); Universidade Do Porto, 4099-002 Porto (PT); UNIVERSIDAD PONTIFICIA COMILLAS, 28015 Madrid (ES)
(72) Inventor: ABENÓJAR BUENDÍA, Juana, 28919 Leganes (Madrid) (ES); OLIVEIRA QUEIRÓS FERREIRA BARBOSA, Ana Sofía, 4099-002 Porto (PT); MARTÍNEZ CASANOVA, Miguel Angel, 28919 Leganés (Madrid) (ES); CAMILO CARBAS, Ricardo Joâo, 4099-002 Porto (PT); VELASCO LÓPEZ, Francisco Javier, 28919 Leganés (Madrid) (ES); MARTINS DA SILVA, Lucas Filipe, Porto 4099-002 (PT); DEL REAL ROMERO, Juan Carlos, 28015 Madrid (ES)
(74) Representative: Herrero & Asociados, S.L.
(86) International application number: PCT/ES2018/070519
(87) International publication number: WO 2019/025651

(57) **Abstract**

This invention refers to a method for producing magnetic cork particles comprising the steps of providing a composition of an alkaline solution and cork particles, with a size comprised between 1 nm and 2 mm, and stirring; Adding an acid solution containing Fe³⁺ and Fe²⁺ cations to the composition to cause the magnetization of the cork particles and maintaining the stirring; Filtering the solution obtained to obtain a magnetized cork particles precipitate, and washing the precipitate with water until the washed solution reaches a pH comprised between 4 and 7, and let dry until obtaining stabilized magnetized cork particles, wherein the magnetization of the cork particles is due to the formation of a magnetite coating on the particles, being the magnetite adsorbed on the particle surface. It also refers to magnetized cork particles thus obtained and their uses.

## Description

### Field of the invention

The present invention refers to a method for producing magnetic particles. Particularly, it refers to a method for obtaining magnetic cork particles, particles obtained by this method and their uses in the manufacture of adhesives, paints or polymer matrix composites or to form small magnetic pieces to be applied in different industries.

### Background of the invention

The demand for new materials with customized properties increases every day, being necessary to combine different groups of materials, such as composites. Due to these requirements, polymers, paints or adhesives with increased electrical, thermal, mechanical (fatigue, toughness, impact or wear) properties are being developed. A combination of properties is also required, along with the need to obtain lighter materials.

In respond to this demand, the authors of the present invention have developed a new process to obtain magnetized cork particles. In 1981, Massart (R. Massart. Preparation of aqueous magnetic liquids in alkaline and acidic media. IEEE transactions on magnetics, 17/2 (1981) 1247-1248*)* obtained an aqueous dissolution of magnetite. By similar method, in 2004, Oliveira et al. manufactured an activated magnetic carbon composite in dissolution to absorb water contaminants, such as oil *(*L.C.A. Oliveira, R.V.R.A. Rios, J.D. Fabris, R.M. Lago, K. Sapag. Magnetic particle technology: A simple preparation of magnetic composites for the adsorption of water contaminants. Journal of Chemical Education, 82 (2004) 248-250*).* Magnetic wood has also been obtained (B. Hui, G. Li, G. Han, Y. Li, L. Wang, J. Li. Fabrication of magnetic response composite based on wood veneers by a simple in situ synthesis method. Wood Science and Technology 49 (2015) 755-767). In order to perform the magnetic wood, a chitosan coating followed by a magnetization treatment is required. Chitosan acts as a bridge linking the magnetite coating and wood substrates which is the key factor for the formation of their strong bonding forces. Other method to obtain magnetic wood was proposed by Dong et al. (Y. Dong, Yutao Y., Y. Zhang, S. Zhan, J. Li. Combined treatment for conversion of fast-growing poplar wood to magnetic wood with high dimensional stability Wood Science and Technology 50 (2016) 503-517*),* with magnetization of poplar wood via coprecipitation of ferric and ferrous ions and then polymerization in situ by impregnation with a furfuryl alcohol solution.

The method proposed by the authors of the present invention starts from the same concepts, i.e, a coprecipitation of ferric and ferrous ions in an alkaline dissolution, but, in this case, without the need to introduce the iron ions from dissolution to the component under vacuum and furfurylation (*Dong et al, 2016*), as demonstrated in wood. It also allows to work directly with the particles, without them being in the dissolution (as *Massart et al, 1981,* and *Oliveira et al,* 2004) and it is neither necessary to insert nitrogen groups on the surface like *Hui, et. al, 2015.* Advantageously, in the method of the present invention magnetite is adsorbed on the surface of particles.

With the magnetizing method proposed in the present invention, cork particles with magnetic properties have been obtained. In composite materials, these particles can be used to modify the final properties. For example, cork modifies mechanical properties of the epoxy adhesives, increasing their impact resistance and toughness (Barbosa, A. Q., da Silva, L. F., Ochsner, A., Abenojar, J., & del Real, J. C. (2012). Influence of the size and amount of cork particles on the impact toughness of a structural adhesive. The Journal of Adhesion, 88(4-6), 452-470). The methodology proposed in the present invention allows manufacturing magnetic cork particles and uses them to reinforce a polymeric matrix, so the particles can be moved to specific locations within the material before the curing process, being able to modify the mechanical properties in specific locations of the composite materials.

All types of relays contain an electroconductive material and they can move freely under the effect of an external magnetic field. In their life cycle, the free ends of the plates, directed towards each other, are overlapped and form a basis for a new type of a switching device with a "germetic magnetically controlled contact" (in Russian) or "reed switch" (in English). Such a contact is called a "magnetically controlled contact" because it closes under the influence of an external magnetic field, unlike contacts of ordinary relays which are switched with the help of mechanical force applied directly to them (Reed Switches and Reed Relays in Electric Relays: Principles and applications. Taylor & Francis Group, LLC, 2006). Contact-elements of reed switches are made of ferromagnetic materials with similar linear expansion coefficients of glass. Most often used material is Permalloy, an iron-nickel alloy (H. Shokrollahi, K. Janghorban. Soft magnetic composite materials (SMCs). Journal of Materials Processing Technology, 189 (2007) 1-12*;* H. Shokrollah. The magnetic and structural properties of the most important alloys of iron produced by mechanical alloying. Materials & Design, 30 (2009) 3374-3387) (usually 25% nickel in alloy). Sometimes Kovar (iron-nickel-cobalt alloy), for high-temperature applications, is used (Shankar B. Dalavi, J. Theerthagiri, M.Manivel Raja, R.N. Panda. Synthesis, characterization and magnetic properties of nanocrystalline FexNi80-xCo20 ternary alloys. Journal of Magnetism and Magnetic Materials, 344 (2013) 30-34*).*

There are many patents which claim for magnetic sensors, but in all cases metal alloys are used (e.g. US 6201259 B1 or US6636391 B2). Advantageously, natural magnetic particles obtained by the process of the present invention could be conformed to form small magnetic pieces, like sensors, relays or electromagnets lighter than metallic ones (e.g. iron alloys) currently used.

Finally, magnetized cork particles of the present invention can be used in the manufacture of composites, paints or adhesives, taking the advantage of their mobility in the polymeric matrix before the curing process.

### Brief description of the drawings

The invention may take physical and chemical form, preferred embodiments of which will be described in detail and illustrated in the accompanying drawings, which are attached to this document:
**Figure 1****.-** Low pressure chamber plasma: (left) outside and (right) inside.
**Figure 2****.-** Scheme of magnetic particles manufacturing process.
**Figure 3****.-** Density of cork particles measured with helium pycnometer.
**Figure 4****.-** Untreated cork particles, ranging 250-500 µm.
**Figure 5****.-** Cork particles, ranging 250-500 µm, treated in plasma chamber.
**Figure 6****.-** Cork particles, ranging 250-500 µm, cleaned.
**Figure 7****.-** Magnetic cork particles: (left) 53-38 µm and (right) 250-125 µm.
**Figure 8****.-** EDX spectrum on a magnetic cork particle in the area marked on micrography.
**Figure 9**.-Elemental mapping obtained from EDX spectra, on a magnetic cork particle, measured in the area marked in figure 8.
**Figure 10****.-** Test with a magnet on the magnetic cork particles: (left) 53-38 µm and (right) 250-125 µm.
**Figure 11****.-** X-Ray diffraction pattern of magnetic cork particles obtained with different alkaline solutions. JCPDS number 89-2355 for Fe₃O₄ (magnetite).

### Detailed description of the invention

In response to the needs of the state of the art, in relation to the search for new materials with customized properties, along with the need to obtain lighter materials, the authors of the present invention have developed a new technique to obtain magnetic particles from biological materials. In this process, the magnetization occurs by applying a coating of magnetite on the biological particle, being the magnetite adsorbed on the material surface.

The proposed technique has been applied to cork, to obtain functionally modified cork particles.

Therefore, the present invention provides a method for producing magnetic cork particles comprising the steps of:
a) Providing a composition comprising an alkaline solution and cork particles, said particles with a size comprised between 1 nm and 2 mm, and stirring;
b) Adding an acid solution, containing Fe³⁺ and Fe²⁺ cations, to the composition obtained in a) to cause the magnetization of the cork particles, and maintaining the stirring;
c) Filtering the solution obtained in b) to obtain a magnetized cork particles precipitate, and
d) Washing the precipitate, obtained in c), with water until the washed solution reaches a pH comprised between 4 and 7, and let dry until obtaining stabilized magnetized cork particles.

Particles are dried until they reach the constant weight; the time depends on the water absorbed by the cork.

The magnetization of the cork particles in b) is due to the formation of a magnetite coating on the particles, being the magnetite adsorbed on the particle surface.

In a particular embodiment, the alkaline solution of step a) is NaOH or NH₃. In a preferred embodiment, 8-15 grams of cork particles per litre of alkaline solution are used.

In the acid solution of step b), containing Fe³⁺ and Fe²⁺ cations, has a pH between 1.5 and 2.5, and is obtained from chloride salts or ferric or ferrous sulphates. Both solutions are running to produce magnetite. In a preferred embodiment, the Fe³⁺/Fe²⁺ cations keep a ratio of 5/3 molar, according to the chemical reaction.

In the method of the present invention, the control of pH is essential for the formation of magnetite, since at a very acidic pH a brownish quasi-gelatinous precipitate is formed and at a pH around 4 the magnetite starts to stabilize and deposit on the cork particles. This stabilization ends with the neutral pH.

In particles with low surface energy, it is necessary to increase their surface energy using mechanical treatments or chemical modifications, in order to increase their wettability and enable them to adhere to other materials. This group of materials includes polymers and most natural materials, such cork. Surface treatments are used to increase surface energy, being surface energy a measurement of the intermolecular forces. When a solid has high surface energy, it attracts liquids better and it is said to be wetted by them.

In the method of the present invention, magnetite particles must be adsorbed superficially by the particles to be treated. Therefore, it is necessary to have a prior suitable surface energy along with surface cleaning.

Accordingly, in particular embodiments of the method of the present invention, surface pre-treatments of the cork particles may be necessary. These pre-treatments include cleaning or surface activation treatments that support the magnetization process.

Therefore, in a particular embodiment of the method of the present invention, the pre-treatment includes washing the cork particles with deionized water, acetone and ethanol, and let them dry.

In another particular embodiment the pre-treatment step includes treating and cleaning the cork particles in a low pressure plasma chamber with different gases (air, oxygen or other inert gases).

Plasma is a strongly ionized gaseous material with an equal number of free positive and negative electric charges. When the plasma comes into contact with the surface of any material, its energy is released and transmitted to that surface. The principle of the process is based on the interactions between the particles of the plasma and the surface of the material (F.F. Chen, M.D. Smith. Plasma in Van Nostrand's Scientific Encyclopedia. John Wiley & Sons, Inc 2007*;* A. Schutze, J.Y. Jeong, S.E. Babayan, J. Park, G.S. Selwyn, R.F. Hicks. The atmospheric-pressure plasma jet: a review and comparison to other plasma sources. IEEE Transactions on Plasma Science, 26/ 6 (1998) 1685 - 1694*).* The effects that can be obtained through plasma treatment are: cleaning, surface activation and surface erosion.

The magnetisation process was carried out in an aqueous dissolution and after the stabilization of this process the particles magnetization is achieved. After the drying process of the particles in step d), the magnetisation is kept.

In another main embodiment of the present invention, those magnetised cork particles obtained by the method of the present invention are contemplated.

The magnetic cork particles thus obtained may be introduced into a polymeric matrix and dispersed in such a way that different mechanical, wear or electrical properties on the material are provided. Once the particles are embedded in the resin matrix, and the curing process has finished, the magnetic properties are no longer observed.

Therefore, another aspect of the present invention refers to the use of magnetised cork particles thus obtained in the manufacture of polymer matrix composites. Particularly, magnetised cork particles are between 0.01 and 70% of the total composition volume of the composition.

The main goal of the present invention is to develop a technique able to obtain functionally modified cork particles in order to provide magnetic properties, which can be moved by the attraction of a magnet. Therefore, particles can be embedded in a resin (adhesive or paint) with the aim of modifying its mechanical, electrical, thermal or wear properties in specific areas where they could be demanded.

Therefore, other aspect of the present invention refers to the use of the magnetic cork particles obtained by the method of the present invention in the manufacture of adhesive or paint compositions. The magnetised cork particles are between 0.01 and 40% of the total composition volume.

At the same time, in some cases, these magnetic particles can be used in the manufacture of small magnetic pieces, like sensors, relays or electromagnets lighter than metallic ones currently used, and applied in a large number of industries.

### EXAMPLES

### Materials and pre-treatments

In this example, cork particles were submitted to a previous pre-treatment in order to have a prior suitable surface energy along with a surface cleaning.

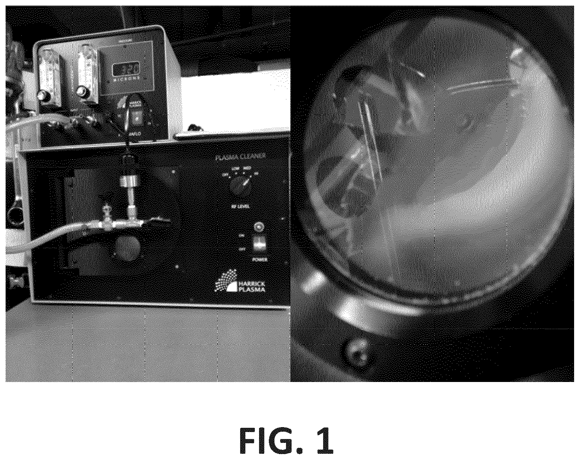

Therefore, two alternative previous pre-treatments of the cork particles were carried out to the magnetization process, which are detailed below:
1. 3-3.5 g of cork particles were washed progressively with 100 ml of deionized water, acetone and ethanol. Particles were left to dry until the next day to do the magnetization process; or
2. Particles were treated and cleaned in the low-pressure plasma chamber for 5 min at low power with air (figure 1). Regarding to this subject several articles have been published with the effect of the plasma on the particles (J. Abenojar, A. Q.Barbosa, Y. Ballesteros, J.C. del Real, L.F.M. da Silva, M.A. Martinez. Effect of surface treatments on cork: surface energy, adhesion and acoustic insulation. Wood Science and Technology 48/1 (January-2014) 207-224*;* A.Q. Barbosa, M. Figueiredo, L. da Silva, A. Ochsner, J. Abenojar. Toughness of a brittle epoxy resin reinforced with micro cork particles: effect of size, amount and surface treatment. Composites Part B, 114 (2017) 299-310, DOI: 10.1016/jcompositesb.2016.10.072*)*

### Magnetization

For the magnetization treatment, a solution of Fe³⁺/Fe²⁺ cations obtained from chloride salts or ferric or ferrous sulphates was necessary. These cations, according to the chemical reaction of formation of the magnetite, should keep a ratio of 5/3 molar in the solution of 20 g/L (maintaining the stoichiometry of the reaction, the volume can be changed). This solution of iron cations has an acidic pH of 2.0.

A 1M solution of ammonia (pH 12) was used as the alkaline solution. A solution of NaOH (5M) could also be used as an alkaline solution. The control of pH is essential for the formation of magnetite; since at a very acidic pH a brownish quasi-gelatinous precipitate was formed and at a pH around 4 the magnetite started to stabilize and deposit on the cork particles. This stabilization ended with the neutral pH.

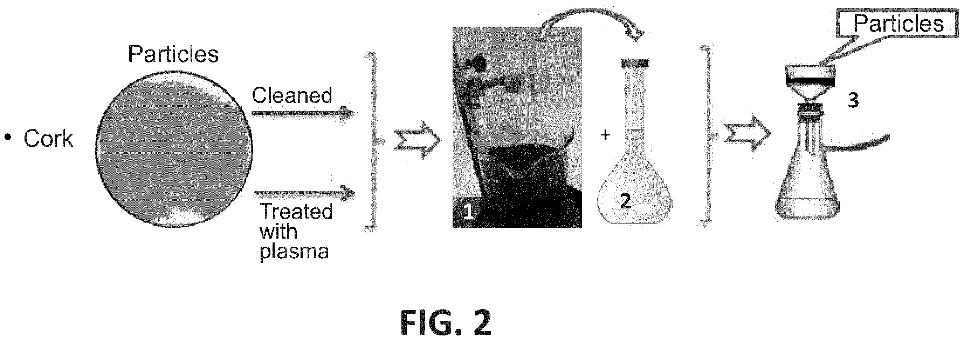

The magnetization process follows the scheme presented in **figure 2****.** Twelve grams of particles per litre of ammonia solution were added. With the aid of a magnetic plate and a magnet, the particles in the ammonia (1) were stirred. From a burette, the solution of Fe cations was added dropwise on the ammonia with the particles to be magnetized (2), maintaining a gentle stirring.

After all the solution was added, it was kept for about 5 minutes under gentle stirring and then another 5 minutes at rest. The solution presented a pH around 9.5. The solution was then filtered and the precipitate had to be washed with deionized water (3) until pH of 6.5. Once the pH was obtained, it was left to dry around 6 hours in an oven at 60 °C, until a constant mass was reached.

### Characterization

In order to study the effect of magnetization, the powder density was measured using a helium pycnometer. The material morphology was also studied with scanning electron microscopy (SEM) and X-ray diffraction tests have been performed.

To prove that magnetic particles have been magnetized, the samples were tested with neodymium magnets (Disc magnets of Ø 60 mm, height 5 mm and Ø 30 mm, height 15 mm, neodymium, N42, nickel-plated by Supermagnetec).

### Results

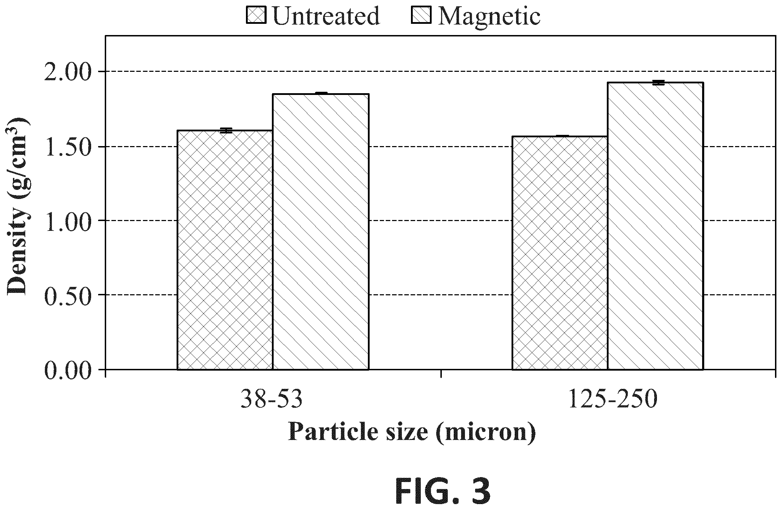

**Figure 3** shows the density results measured with the helium pycnometer for different cork particle size. It was observed an increase of 13.5% for smaller particles (38-53 µm) and 17.5% for bigger particles (125 and 250 µm), leading to the conclusion that magnetite was present in the particles. Bigger particles had more cavities where magnetite could be deposited. Although smaller particles present more surface available to magnetite deposition, they also present less amount of cavities, consequently a difference between density is observed.

The amount (in volume) of cork particles added to the polymeric matrix is thus intrinsically linked to the density; there is the necessity to recalculate its value taking into account this density increase.

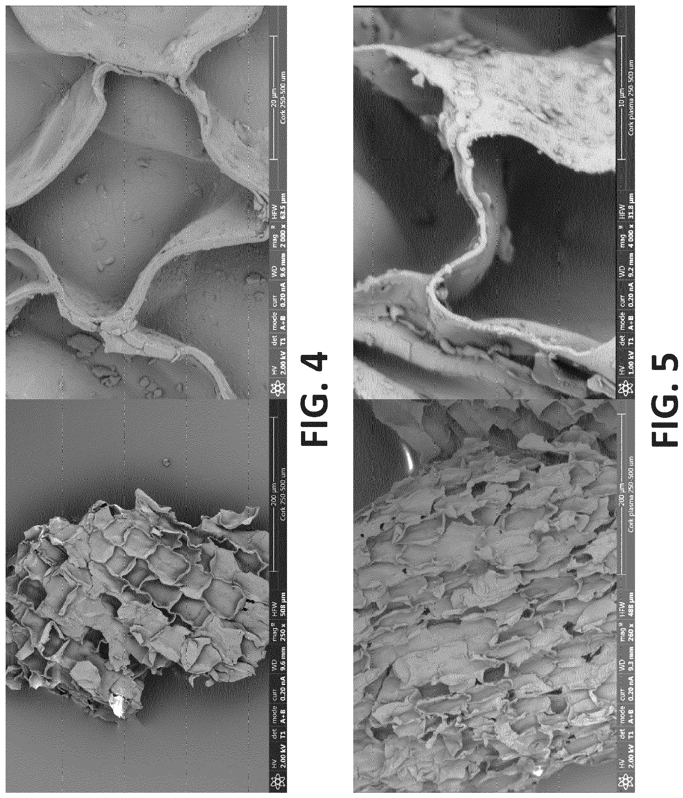

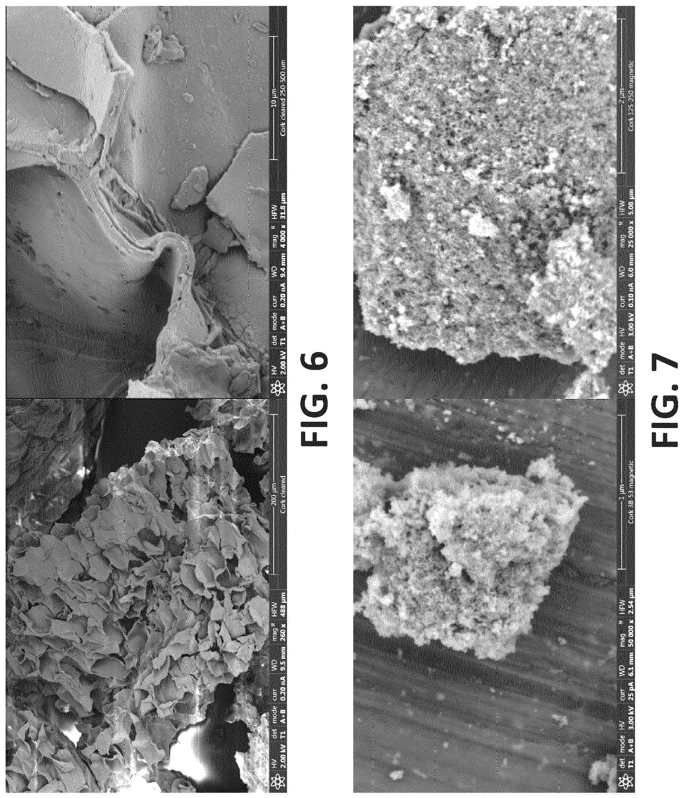

**Figure 4** presents the cork particles without any treatment, where the honeycomb structure, characteristic of cork, is clearly identified. In the analysed particles, cell wall thickness was between 1.5 and 2 µm. When the plasma treatment is carried out, a decrease in the cell wall size up to 0.4 µm and a deformation in the particle (**figure 5**) is apparently observed. However, this effect was not detected when the particles were washed (**figure 6**).

A better bond between cork and magnetite is observed in the particles treated in a plasma chamber, compared to washed particles. Although cork particles may be magnetized with the two pre-treatments. In **figure 7****,** it can be seen how the particles are entirely coated regardless of their size, and the cork honeycomb cell structure of the particles is not perceived.

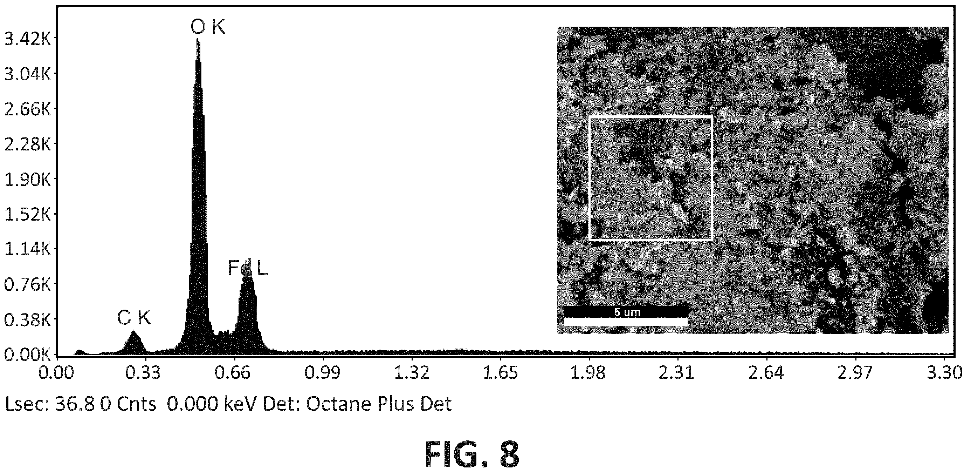

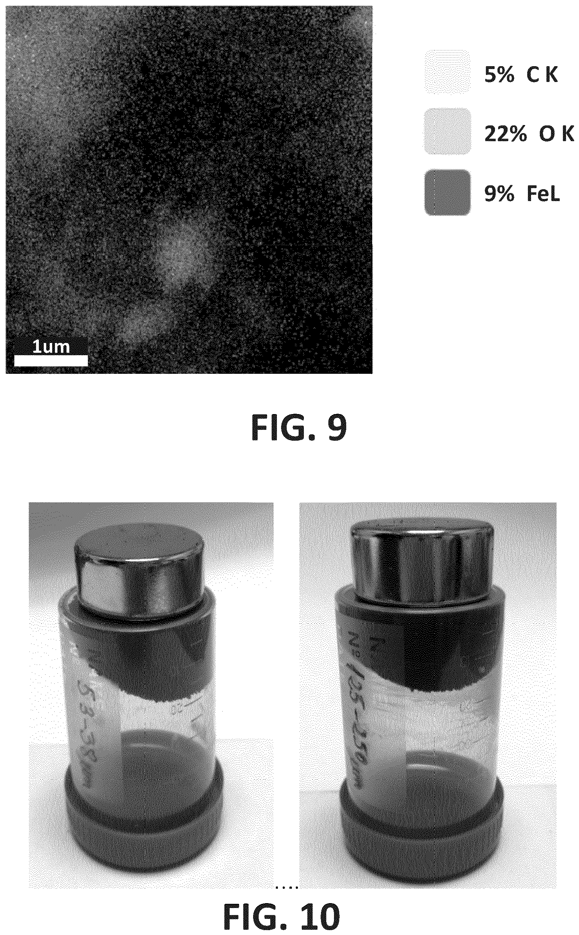

When cork particles were analysed by EDX (Energy Dispersive X-ray Spectra), the elements present and their amount were revealed and the presence of iron on the particles was confirmed. According to **figure 8****,** in the analysed area, it was found carbon, line K (7.88 wt%), oxygen, line K (56.49 wt%) and iron, line L (35.63 wt%). **Figure 9** shows an elemental mapping obtained on the same area as **figure 8****.** Although the lack of flatness of the particles does not allow an elementary mapping over the entire area, it is possible to observe the presence of the three elements in the analysed zone.

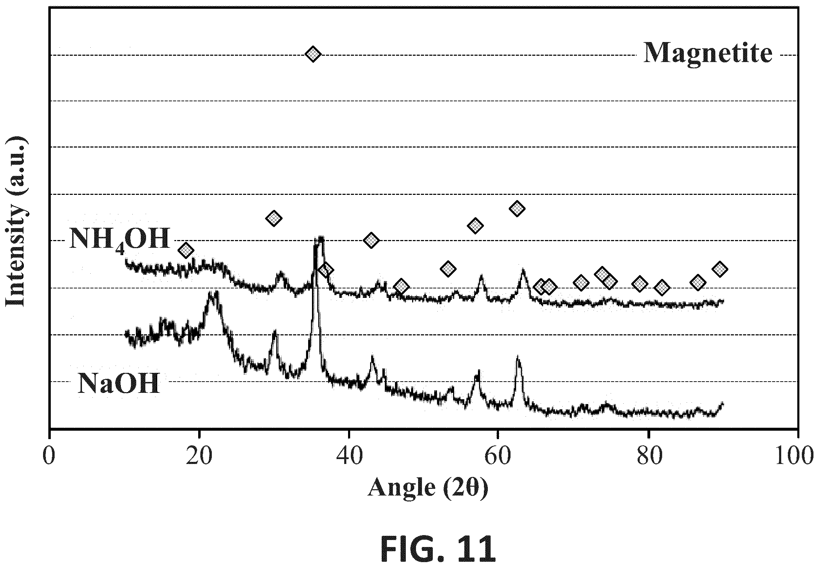

Using a magnet, it was shown how all particles were attracted regardless of their size (see **figure 10**). The presence of magnetite in the cork particles was also studied using X-ray diffraction. Cork, being an amorphous material, presents the characteristic diffractogram for any amorphous material. When the magnetic cork was studied by X-ray diffraction (**figure 11**) the presence of magnetite can be observed by the coincidence of the pattern number of the magnetite No. 89-2355. In this analysis, the test was carried out on parts in which the alkaline solution of ammonium hydroxide or dissociated ammonia (NH₄OH) was changed to sodium hydroxide (NaOH). The results are the same, coinciding the magnetite with the same pattern.

## Claims

1. A method for producing magnetic cork particles, the method comprising the steps of:
a) Providing a composition comprising an alkaline solution containing cork particles, said particles with a size comprised between 1 nm and 2 mm and stirring;
b) Adding an acid solution containing Fe³⁺ and Fe²⁺ cations to the composition obtained in a) to cause the magnetization of the cork particles and maintaining the stirring;
c) Filtering the solution obtained in b) to obtain a magnetized cork particles precipitate, and
d) Washing the precipitate with water until the washed solution reaches a pH comprised between 4 and 7 and let dry until obtaining stabilized magnetized cork particles,
wherein the magnetization of the cork particles in b) is due to the formation of a magnetite coating on the particles, being the magnetite adsorbed on the particle surface.

2. Method according to claim 1, wherein the alkaline solution of step a) is NaOH or NH₃.

3. Method according to claims 1 or 2, wherein the acid solution has a pH between 1.5 and 2.5.

4. Method according to claim 3, wherein the acid solution of step b), containing Fe³⁺ and Fe²⁺ cations, is obtained from chloride salts or ferric or ferrous sulphates.

5. Method according to any of claims 1-4 wherein the Fe³⁺/Fe²⁺ cations keep a ratio of 5/3 molar.

6. The method according to any of previous claims, wherein the cork particles are subjected to a surface pre-treatment prior to step a).

7. The method according to claim 6, wherein the pre-treatment is a cleaning or surface activation treatment.

8. The method according to claim 7, wherein the pre-treatment includes washing the cork particles with deionized water, acetone and ethanol, and let them dry.

9. The method according to claim 7, wherein the pre-treatment includes treating and cleaning cork particles in a low pressure plasma chamber with a gas.

10. Magnetised cork particles obtained by the method according to claims 1-9.

11. Use of magnetised cork particles, according to claim 10, in the manufacture of adhesive or paint compositions.

12. Use according to claim 11, wherein the magnetised cork particles are between 0,01 and 40% of the total composition volume.

13. Use of magnetised cork particles, according to claim 10, in the manufacture of polymer matrix composites.

14. Use according to claim 13, wherein the magnetised cork particles are between 0,01 and 70% of the total composition volume of the composite.

15. Use of magnetised cork particles, according to claim 10, in the manufacture of small magnetic particles.

16. Use according to claim 15 wherein the small magnetic particles are sensors, relays or electromagnets.
